# EUROPÄISCHE PATENTSCHRIFT

(11) **EP 2 415 986 B1**
(45) Veröffentlichungstag und Bekanntmachung des Hinweises auf die Patenterteilung: **15.01.2014**
(21) Anmeldenummer: 11183380.2
(22) Anmeldetag: 11.08.2009
(51) Int. Cl.: F01N 9/00, F01N 3/20

(54) **Vorrichtung mit einer Reduktionsmittelleitung und einem Windschutzelement**
Device having a reducing agent line and a wind protection element
Dispositif doté d'un guidage d'agent réducteur et d'un élément de protection contre le vent

(30) Priorität: 13.08.2008 DE 102008038984
(43) Veröffentlichungstag der Anmeldung: 08.02.2012
(62) Teilanmeldung aus: 09781696.1
(73) Patentinhaber: Emitec Gesellschaft für Emissionstechnologie mbH, 53797 Lohmar (DE)
(72) Erfinder: Hodgson, Jan, 53840 Troisdorf (DE); Brück, Rolf, 51429 Bergisch Gladbach (DE)
(74) Vertreter: Rössler, Matthias

(56) Entgegenhaltungen:
- WO-A1-2007/126366
- DE-A1-102006 060 314
- US-A1- 2005 207 936

## Beschreibung

Die vorliegende Erfindung betrifft ein Verfahren zum selektiven Beheizen einer Reduktionsmittelleitung einer SCR-Vorrichtung während des Betriebes einer Abgasreinigungsanlage eines Verbrennungsmotors und weiter eine Vorrichtung zur Abgasreinigung aufweisend einen Vorratstank für ein Reduktionsmittel für SCR-Anwendungen, eine Einrichtung zum Einbringen des Reduktionsmittels in eine Abgasleitung eines Verbrennungsmotors und wenigstens eine Reduktionsmittelleitung zur strömungstechnischen Verbindung des Vorratstanks mit der Einrichtung.

Aufgrund der gestiegenen Anforderungen an die Abgasreinigungsanlagen von Verbrennungskraftmaschinen, insbesondere von Dieselmotoren, werden in immer größerem Umfang SCR-Anlagen in den Abgassystemen von Verbrennungskraftmaschinen zur Reduzierung der Stickoxide in einem Abgas eingesetzt. Zumindest weisen die SCR-Anlagen einen Vorratstank für ein Reduktionsmittel bzw. ein Reduktionsmittelvorläufer, insbesondere eine wässrige Harnstofflösung (z. B. AdBlue oder Denoxium), eine Einrichtung zum Einbringen des Reduktionsmittels in eine Abgasleitung, z. B. eine Einspritzvorrichtung oder eine Verdampfungseinheit sowie mindestens eine Reduktionsmittelleitung zur strömungstechnischen Verbindung des Vorratstanks mit der Einrichtung zum Einbringen des Reduktionsmittels auf.

Bei einer solchen SCR-Anlage sind Vorratstank und Einrichtung zum Einbringen des Reduktionsmittels in die Abgasleitung sehr häufig weit auseinander liegend in einem Kraftfahrzeug positioniert, so dass eine Leitungslänge von z. B. wenigstens 2 m zwischen Vorratstank und Einrichtung vorgesehen ist. Die Einrichtung zum Einbringen des Reduktionsmittels in die Abgasleitung ist dabei in den meisten Fällen in einem vom Verbrennungsmotor entfernten Bereich einer Abgasleitung angeordnet, in dem ein SCR-Katalysator und gegebenenfalls andere Abgasbehandlungseinheiten angeordnet sind. Da diese Abgasbehandlungseinheiten zumeist im Außenbereich bzw. Unterbodenbereich eines Kraftfahrzeugs angeordnet sind, werden insbesondere auch die Reduktionsmittelleitungen für das Reduktionsmittel zwischen Vorratstank und der Einrichtung teilweise im Außenbereich des Kraftfahrzeuges verlegt. Insbesondere tritt eine solche Anordnung der Reduktionsmittelleitungen auch bei einem nachträglichen Einbau der SCR-Anlagen auf (im Rahmen einer Nachrüstmaßnahme), weil eine Integration dieser SCR-Anlagen in die bestehende Fahrzeugarchitektur möglichst kostengünstig ausgefiihrt werden soll. Die Reduktionsmittelleitung zwischen Vorratstank und Einrichtung ist damit beispielsweise wenigstens in einzelnen Abschnitten ungeschützt dem Fahrtwind eines solchen Kraftfahrzeuges ausgesetzt, wodurch die konvektive Abführung leitungsnaher und damit ggf. von der Leitung erwärmter Luft in hohem Maße verstärkt wird. Dadurch kommt es zu einer zusätzlichen Abkühlung des insbesondere wässrigen Reduktionsmittels innerhalb der Reduktionsmittelleitung, das ggf. durch diesen zusätzlichen so genannten "Windchill-Faktor" unter den Gefrierpunkt des Reduktionsmittels abgekühlt werden könnte.

Aus dem bisherigen Stand der Technik sind elektrisch beheizbare Reduktionsmittelleitungen bekannt, wobei die dort beschriebenen Heizungen jedoch insbesondere auf den Entnahmebereich aus dem Vorratstank bzw. auf die Pumpe beschränkt sind.

Es ist also insbesondere darauf zu achten, dass eine SCR-Vorrichtung mit einem möglichst geringen Energieverbrauch betrieben wird und dass weiter ein sicheres Reduzieren der schädlichen Abgaskomponenten vorgenommen wird, unabhängig von den herrschenden Betriebs- oder Umgebungsbedingungen. Beim nachträglichen Einbau einer solchen SCR-Anlage in ein Kraftfahrzeug sollten die notwendigen Umbaumaßnahmen zudem möglichst gering und dementsprechend kostengünstig sein.

Die DE-A1-10 2006 060 314 offenbart eine Vorrichtung zum Befördern eines fluiden Mediums, insbesondere zum Dosieren eines flüssigen Reduktionsmittels in ein Abgassystem zur Reduzierung von Schadstoffen in einem Abgas zumindest aufweisend eine beheizte Förderleitung und mindestens eine Systemkomponente mit einem beheizten Innenbereich, wobei die Förderleitung ein Leitungsanschlussstück umfasst und die Systemkomponente ein mit dem Leitungsanschlussstück gekoppeltes Modulanschlusstück umfasst, wobei in das Leitungsanschlussstück und das Modulanschlussstück eine Wärmeleithülse zur Übertragung von Wärme eingebracht werden kann. Durch diese Wärmeleithülse wird eine effektive Heizung des Modulanschlussstücks und des Leitungsanschlussstücks mit Hilfe der beheizten Förderleitung und mit Hilfe des beheizten Innenbereichs ermöglicht. Die DE-A1-10 2006 060 314 schlägt zusätzlich vor das Leitungsanschlussstück und das Modulanschlusstück mit einer thermischen Isolierung, beispielsweise einer Ummantelung, zu schützen.

Aufgabe der vorliegenden Erfindung ist es, die eingangs geschilderten Probleme wenigstens teilweise zu lösen und insbesondere ein Verfahren und eine Vorrichtung anzugeben, durch die einerseits ein möglichst geringer Energieverbrauch erreicht und andererseits ein sicherer Betrieb der Abgasreinigungsanlage und eine effektive Reduzierung der Schadstoffe im Abgas ermöglicht wird.

Diese Aufgaben werden gelöst durch eine Vorrichtung gemäß Patentanspruch 1. Vorteilhafte Ausgestaltungen und Einsatzgebiete der Erfindung sind in den jeweils abhängigen Patentansprüchen angegeben. Es ist darauf hinzuweisen, dass die in den abhängig formulierten Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Zunächst beschrieben werden soll ein Verfahren, welches geeignet ist zum selektiven Beheizen einer Reduktionsmittelleitung einer SCR-Vorrichtung während des Betriebs einer Abgasreinigungsanlage eines Verbrennungsmotors und wenigstens die folgenden Schritte umfasst.
a) Messen und/oder Berechnen der Wärmeabfuhr aus der Reduktionsmittelleitung in mehreren Zonen der Reduktionsmittelleitung,
b) Identifizieren von Zonen der Reduktionsmittelleitung in denen ein zeitnahes Einfrieren des Reduktionsmittels zu erwarten ist,
c) Aktivieren von Heizenergie zur Vermeidung des Einfrierens des Reduktionsmittels.

Infolge des selektiven Beheizens, also eines Beheizens der Reduktionsmittelleitung in unterschiedlichen Zonen der Reduktionsmittelleitung unabhängig voneinander und insbesondere in veränderbaren Zeitintervallen, eröffnet sich die Möglichkeit, den Energieverbrauch für den Betrieb der SCR-Vorrichtung deutlich zu senken. Dabei wird dieses Verfahren jedenfalls angewandt während des Betriebes einer Abgasreinigungsanlage, kann ggf. aber auch vor Inbetriebnahme des Fahrzeugs z. B. zum Zeitpunkt des Aufschließens oder des Türöffnens initiiert werden.

Dabei kann die Wärmeabfuhr aus der Reduktionsmittelleitung innerhalb einer jeweiligen Zone konkret gemessen und/oder durch eine Berechnung ermittelt werden. Die Berechnung kann insbesondere durch selektives Messen einzelner Parameter (wie Temperatur, Druck, etc.) unterstützt werden, so dass der konkrete Wärmeverlust einer bestimmten Oberfläche der Reduktionsmittelleitung nicht durch Messinstrumente erfasst werden muss. Dabei werden mehrere Zonen der Reduktionsmittelleitung zwischen Vorratstank und einer Einrichtung zum Einbringen des Reduktionsmittels in die Abgasleitung betrachtet, so dass insbesondere auch nicht die gesamte Reduktionsmittelleitung überwacht werden muss. Insbesondere werden also Zonen ausgewählt, die entweder den Umgebungseinflüssen, z. B. Fahrtwind, Umgebungstemperatur, Spritzwasser verstärkt ausgesetzt sind. Demgegenüber können gewisse Bereiche, die besonders geschützt im Kraftfahrzeug angeordnet sind, außer Acht gelassen werden.

Aufgrund der Messung und/der der Berechnung der Wärmeabfuhr werden gemäß Schritt b) die Zonen identifiziert, in denen ein Einfrieren des Reduktionsmittels sofort oder in naher Zeit zu erwarten ist.

Darauffolgend wird gemäß Schritt c) Heizenergie aktiviert, so dass innerhalb der identifizierten Zone(n) Wärmeenergie der Reduktionsmittelleitung zugeführt werden kann, um ein Einfrieren in diesen Zonen zu vermeiden.

Zusammenfassend kann also insbesondere auch festgehalten werden, dass die Wärmeabfuhr in verschiedenen Zonen berechnet wird und gegebenenfalls (mindestens) einer der Zonen Heizenergie versorgt wird, wenn diese droht einzufrieren. Natürlich könnten hierfür auch mehrere, verschiedene Heizzonen bei der Reduktionsmittelleitung vorgesehen sein, dies erhöht allerdings den technischen Aufwand und ist somit regelmäßig nur für Ausnahmesituationen anzuraten.

Gemäß einer weiteren Ausgestaltung des Verfahrens wird wenigstens in Schritt a) oder Schritt b) zumindest bei der Berechnung der Wärmeabfuhr eine Umgebungstemperatur und/oder eine Fahrgeschwindigkeit eines Fahrzeugs berücksichtigt. Die Fahrgeschwindigkeit und/oder die Umgebungstemperatur können einerseits durch zusätzliche Messinstrumente erfasst oder aber aus den bereits vorhandenen Fahrzeugsystemen übernommen werden. Die beiden Faktoren - Umgebungstemperatur und/oder Fahrgeschwindigkeit - haben einen besonders großen Einfluss auf ein mögliches Einfrieren des Reduktionsmittels in den Zonen der Reduktionsmittelleitung. Daher kann auch unabhängig von Schritt a) eine Identifizierung von Zonen der Reduktionsmittelleitung zur Durchführung des Schrittes c) erfolgen. Der Schritt c) wird dann in Abhängigkeit von Grenzwerten oder einer Funktion der Parameter Umgebungstemperatur und/oder Fahrgeschwindigkeit initiiert.

Gemäß einer weiteren vorteilhaften Ausgestaltung des Verfahrens wird in Schritt a) oder Schritt b) zumindest bei der Berechnung der Wärmeabfuhr die Zufuhr von Heizenergie hin zur Reduktionsmittelleitung von Komponenten der Abgasreinigungsanlage und/oder weiterer Wärmequellen eines Fahrzeugs berücksichtigt.

Eine weitere Möglichkeit zur Energieeinsparung beim Betrieb der SCR-Vorrichtung ist die Berücksichtigung der Zufuhr von Heizenergie hin zur Reduktionsmittelleitung. Als Komponenten der Abgasreinigungsanlage zählen z. B. die sich in Folge des Betriebs erwärmende Pumpe, sich erwärmende Filter oder Ventile zur Durchleitung des Reduktionsmittels.

Weitere Komponenten, insbesondere des Fahrzeugs, die als Wärmequellen in Frage kommen, sind z. B. der Verbrennungsmotor, die Abgasleitungen, der Fahrzeuginnenraum, Luftleitungen oder ähnliches. Diese Komponenten des Fahrzeugs und auch der Abgasreinigungsanlage können insbesondere auch während der Integration der Reduktionsmittelleitung einer SCR-Vorrichtung bereits berücksichtigt werden, so dass die kritischen Zonen der Reduktionsmittelleitung in unmittelbarer Nähe dieser Wärme abstrahlenden Komponenten angeordnet wird, wobei natürlich eine mögliche Überhitzung der Reduktionsmittelleitung zu beachten ist.

Da insbesondere die Zufuhr von Heizenergie in einzelnen Zonen der Reduktionsmittelleitung sehr unterschiedlich ausfallen kann, sind dementsprechend zusätzliche geeignete Zonen auszuwählen, in denen die zugeführte Heizenergie ermittelt werden kann. Diese Zonen können mit den Zonen zur Ermittelung der Wärmeabfuhr übereinstimmen.

Gemäß einer besonderen Ausgestaltung des Verfahrens werden vor Schritt a) die Zonen der Reduktionsmittelleitung wenigstens hinsichtlich der Parameter Umgebungstemperatur oder Fahrgeschwindigkeit ausgewählt. Besonders exponierte Bereiche der Reduktionsmittelleitung werden bei entsprechenden Umgebungseinflüssen z. B. durch die Parameter Umgebungstemperatur und Fahrgeschwindigkeit einer verstärkten Wärmeabfuhr ausgesetzt. Diese Bereiche sind dementsprechend besonders gefährdet, vorzeitig einzufrieren. Daher kann das Verfahren derart selektiv durchgeführt werden, dass bei den Mess- bzw. Berechnungsroutinen gemäß Schritt a) nur diese besonders gefährdeten Zonen überwacht werden.

Gemäß einer weiteren besonderen Ausgestaltung des Verfahrens werden die zeitlichen Abstände zwischen den Messungen und/oder Berechnungen in Schritt a) gemäß einer Funktion wenigstens der Parameter Umgebungstemperatur oder Fahrgeschwindigkeit variiert. Die Messungs- bzw. Berechnungsroutinen gemäß Schritt a) können also für besonders ausgewählte Zonen in dem Maße verstärkt ausgeführt werden, dass sie in kürzeren Zeitintervallen überwacht werden.

Gemäß einer weiteren vorteilhaften Ausgestaltung des Verfahrens wird die Heizenergie durch eine elektrische Heizung und/oder durch die Förderung von Reduktionsmittel durch die Reduktionsmittelleitung zugeführt. Wird also durch das Verfahren festgestellt, dass eine bestimmte Zone der Reduktionsmittelleitung unmittelbar gefährdet ist einzufrieren, kann diese entweder direkt und ausschließlich durch eine vorgesehene Heizung oder, insbesondere wenn es energetisch günstiger ist, durch eine Förderung von Reduktionsmittel, z. B. durch eine Umlaufförderung aus dem Vorratstank über die Reduktionsmittelleitung und eine Rückführleitung, beheizt werden. Somit kann gezielt in durch das Verfahren identifizierten Zonen und für limitierte Zeiträume Heizenergie der Reduktionsmittelleitung zugeführt werden, so dass bei möglichst geringem Energieeinsatz die volle Funktionsfähigkeit der Vorrichtung erhalten wird.

Die Erfindung betrifft eine Vorrichtung zur Abgasreinigung eines Fahrzeugs, die insbesondere gemäß einem erfindungsgemäßen Verfahren betreibbar ist, zumindest aufweisend einen Vorratstank für ein Reduktionsmittel, eine Einrichtung zum Einbringen des Reduktionsmittels in eine Abgasleitung eines Verbrennungsmotors sowie wenigstens eine Reduktionsmittelleitung mit mehreren Zonen zur strömungstechnischen Verbindung des Vorratstanks mit der Einrichtung. Die Zonen sind insbesondere räumlich voneinander getrennte Abschnitte der Reduktionsmittelleitung, in der jeweils zumindest eine Messwerterfassung oder eine Schutzmaßnahme gegen Einfrieren angeordnet und/oder durchführbar ist. Somit sind hier insbesondere Sensoren, Messwertaufnehmer, Heizelemente, Isolierungen oder ähnliches festzustellen.

Als Reduktionsmittel wird insbesondere eine Harnstoff Wasser-Lösung mit einem Gefrierpunkt von ca. -11 °C eingesetzt, die industrieweit auch unter dem Namen AdBlue bekannt ist. Die Einrichtung zum Einbringen des Reduktionsmittels in eine Abgasleitung eines Verbrennungsmotors, insbesondere eines Dieselmotors, ist z. B. eine Einspritzdüse oder eine Verdampfungseinheit, durch die das Reduktionsmittel möglichst fein verteilt in den Abgasstrom eingebracht wird. Bei der wenigstens einen Leitung, die ggf. auch mehrteilig ausgeführt zur strömungstechnischen Verbindung des Vorratstanks und der Einrichtung vorgesehen ist, handelt es sich insbesondere um isolierte, flexible Schlauchmaterialien oder auch metallische Rohre, insbesondere Edelstahlrohre, die insbesondere wenigstens teilweise beheizbar sind.

Gemäß der Erfindung ist wenigstens ein Windschutzelement zur Verringerung der Abführung von Wärmestrahlung der Reduktionsmittelleitung vorgesehen, wobei das wenigstens eine Windschutzelement für ein Gas nicht durchströmbar ist und in einem Abstand kleiner als 100 mm zu der Leitung angeordnet ist.

Das wenigstens eine Windschutzelement ist dabei insbesondere an den Bereichen der Reduktionsmittelleitungen vorgesehen, die z. B. einem Fahrwind eines Kraftfahrzeuges ausgesetzt sind. Durch den Fahrtwind des Kraftfahrzeuges wird die durch die Leitung abgestrahlte Wärme des Reduktionsmittels verstärkt abgeführt. Insbesondere bei niedrigeren Umgebungstemperaturen erzeugt dieser Fahrtwind eine starke Abkühlung der Reduktionsmittelleitungsoberfläche durch die Abführung der leitungsnahen Umgebungsluft. Bei hohen Windgeschwindigkeiten und einer Umgebungslufttemperatur nahe am Gefrierpunkt des Reduktionsmittels kann es also trotzdem zu einem Einfrieren des Reduktionsmittels und zu einem Versagen der Abgasreinigung durch die SCR-Anlage kommen. Dann kann auch die Bereitstellung von heizbaren Reduktionsmittelleitungen (allein) nicht ausreichend sein.

Das Windschutzelement ist dementsprechend derart angeordnet, dass ein Gas, insbesondere der Fahrtwind, so um die Reduktionsmittelleitung herum abgelenkt wird, dass ein Luftaustausch bzw. eine Luftbewegung in der unmittelbaren Umgebung der Reduktionsmittelleitung weitestgehend vermieden wird. Das Windschutzelement ist dementsprechend für ein Gas nicht durchströmbar, also insbesondere nicht perforiert und ist bevorzugt aus Kunststoff, aus Leichtmetallen oder wenigstens teilweise aus natürlich nachwachsenden Rohstoffen herstellbar.

Der Abstand des Windschutzelementes von der Reduktionsmittelleitung ist dabei nicht größer als 100 mm, insbesondere kleiner 80 mm und besonders bevorzugt kleiner 50 mm. Der Abstand wird hier als die Distanz zwischen einer der Reduktionsmittelleitung zugewandten Oberfläche des Windschutzelementes und der dem Windschutzelement zugewandten Oberfläche der Reduktionsmittelleitung definiert.

Das Windschutzelement kann auch zum Schutz anderer exponierter oder von einem Gas umströmter Komponenten einer SCR-Anlage eingesetzt werden. Insbesondere können somit auch Filter, Pumpen, Ventile, Reduktionsmittelreservoirs außerhalb des Vorratstanks und Einspritzdüsen durch ein Windschutzelement geschützt werden.

Die Vorrichtung ist so gestaltet, dass das Windschutzelement den Umfang zumindest eines Querschnittes der Leitung zu weniger als 270° abdeckt. Damit soll insbesondere verdeutlicht werden, dass es sich hier nicht um eine Isolation der Reduktionsmittelleitung selbst handelt, sondern um ein separates Bauteil, das gegebenenfalls an geeigneten Punkten der Fahrzeugkarosserie befestigt ist und somit sogar zusätzlich zu etwaigen Isolierungen oder Heizeinrichtungen der Reduktionsmittelleitung eingesetzt wird und die Konvektion der leitungsnahen Umgebungsluft verringern soll. Insbesondere bei einem flächigen und weitestgehend eben ausgeführten Windschutzelement ist es ausreichend, den Umfang zumindest eines Querschnitts der Reduktionsmittelleitung über einen Bereich von weniger als 180° und insbesondere weniger als 90° abzudecken, so dass ein entsprechender Effekt nachweisbar ist. Vorzugsweise deckt das Windschutzelement der Vorrichtung die Reduktionsmittelleitung an keinem Querschnitt der Reduktionsmittelleitung über mehr als 270° ab.

Gemäß einer weiteren bevorzugten Ausführungsform der Vorrichtung ist das Windschutzelement an einer Verbindung nur über eine Isolation mit der Reduktionsmittelleitung verbunden, wobei die Isolation eine Wärmeleitfähigkeit von höchsten 0,1 W/mK [Watt / Meter*Kelvin)] aufweist. Dies gilt also insbesondere für den Fall, dass das Windschutzelement an der Reduktionsmittelleitung selbst angebunden ist, z. B. über eine Manschette oder eine ähnliche Klemmvorrichtung. Durch die Isolation soll eine thermische Entkopplung zwischen Reduktionsmittelleitung und Windschutzelement erreicht werden.

Die erfindungsgemäße Vorrichtung ist insbesondere in Kraftfahrzeugen einsetzbar, insbesondere in Lastkraftwagen, bei denen die Abgasanlagen häufig exponiert im Außenbereich des Fahrzeugs angeordnet sind, so dass hier ein besonderer Bedarf für ein erfindungsgemäßes Verfahren bzw. eine entsprechende Vorrichtung besteht. Zudem können auch Non-road-Fahrzeuge wie z. B. Landmaschinen von einem solchen erfindungsgemäßen Verfahren profitieren.

Es ist darauf hinzuweisen, dass die Idee des Windschutzes als Einfrierschutz für HWL-Lösungen bei mobilen Systemen auch unabhängig vom Verfahren der selektiven Heizung zum Einsatz gelangen kann.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf diese jedoch nicht beschränkt sind. Es zeigen schematisch:
- Fig. 1:: ein Fahrzeug mit einer beschriebenen Vorrichtung,
- Fig. 2:: eine besondere Ausgestaltung der Vorrichtung, und
- Fig. 3:: einen Leitungsabschnitt mit einem Windschutzelement.

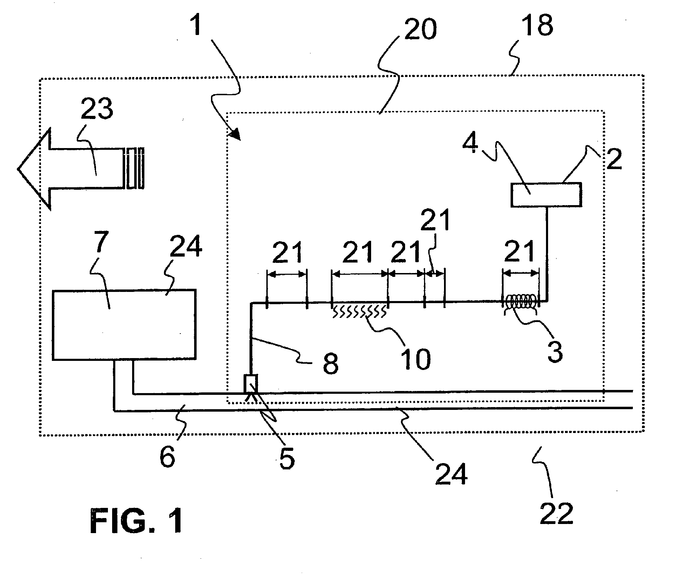

Fig. 1 zeigt schematisch ein Kraftfahrzeug 18 mit einem Verbrennungsmotor 7 und einer Abgasleitung 6, wobei an einer Stelle der Abgasleitung 6 eine Einrichtung 5 zum Einbringen eines Reduktionsmittels 4 vorgesehen ist. Die Einrichtung 5 ist dabei über eine Reduktionsmittelleitung 8 mit einem Vorratstank 2 verbunden, in dem das Reduktionsmittel 4 in ausreichender Menge vorgehalten ist. Dabei ist die Reduktionsmittelleitung 8 in Teilbereichen ihrer Erstreckung in mehrere Zonen 21 unterteilbar, in denen eine Wärmeabfuhr 10 gemessen und/oder berechnet werden kann. Gleichzeitig sind gleiche oder andere Zonen 21 vorgesehen, in denen Heizenergie z. B. in Form einer Heizung 3 der Reduktionsmittelleitung 8 zugeführt werden kann. Wesentliche Einflussfaktoren auf die Wärmeabfuhr 10 von der Reduktionsmittelleitung 8 sind Fahrgeschwindigkeit 23 des Kraftfahrzeugs 18 und/oder Umgebungstemperatur 22. Wesentlicher Einflussfaktor hinsichtlich der Zufuhr von Heizenergie sind insbesondere wärmeabgebende Komponenten 24 des Fahrzeugs, z. B. Verbrennungsmotor 7 und Abgasleitung 6.

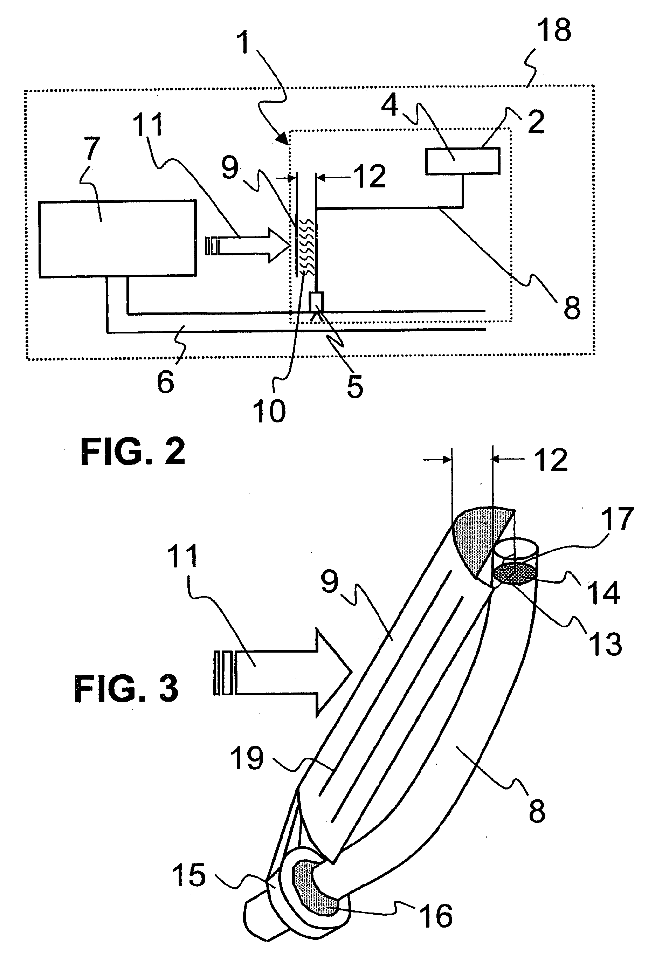

Fig. 2 zeigt schematisch ein Kraftfahrzeug 18 mit einem Verbrennungsmotor 7 und einer Abgasleitung 6, wobei an einer Stelle der Abgasleitung 6 eine Einrichtung 5 zum Einbringen eines Reduktionsmittels 4, insbesondere eines Reduktionsmittels 4 zur Reduzierung der Stickoxide in einem Abgas, vorgesehen ist. Die Einrichtung 5 ist dabei über eine Reduktionsmittelleitung 8 mit einem Vorratstank 2 verbunden, in dem das Reduktionsmittel 4, insbesondere ein Reduktionsmittelvorläufer, in ausreichender Menge vorgehalten ist. Dabei ist die Reduktionsmittelleitung 8 in Teilbereichen ihrer Erstreckung in windgeschützte Bereiche des Kraftfahrzeuges 18 verlegt, insbesondere profitiert sie an motornahen Stellen von der hier erzeugten Abwärme, so dass eine zusätzliche Verkleidung oder Isolierung der Reduktionsmittelleitung 8 in diesen Abschnitten nicht zwingend vorzusehen ist. In anderen Teilbereichen der Reduktionsmittelleitung 8 ist diese aber einem Gas 11 ausgesetzt, insbesondere einem Luftstrom, z.B. hervorgerufen durch die Fahrgeschwindigkeit 23 des Kraftfahrzeuges 18, das die Wärmeabfuhr 10 der Reduktionsmittelleitung 8 in diesem Bereich verstärken würde. Daher ist in diesen Bereichen ein Windschutzelement 9 vorgesehen, dass eine Wärmeabfuhr 10 durch ein vorbeiströmendes Gas 11, insbesondere dem Fahrtwind, wenigstens verringern kann. Das Windschutzelement 9 ist dabei in einem Abstand 12 von der Reduktionsmittelleitung 8 angeordnet.

Fig. 3 zeigt schematisch in einer perspektivischen Ansicht einen exponierten Abschnitt der Reduktionsmittelleitung 8, der gegenüber einem vorbeiströmenden Gas 11, insbesondere einem Fahrtwind, durch ein Windschutzelement 9 über einen gewissen Umfangsbereich abgedeckt ist. Dabei ist hier dargestellt, dass das Windschutzelement 9 wenigstens in einem Bereich über eine Verbindung 15 mit der Reduktionsmittelleitung 8 verbunden ist. Die Verbindung 15 weist eine Isolation 16 auf, die eine zusätzliche Wärmeabfuhr 10 von der Reduktionsmittelleitung 8 auf die Masse des Windschutzelementes 9 verhindern soll. Das Windschutzelement 9 ist in einem Abstand 12 von der Reduktionsmittelleitung 8 angeordnet, wobei dieser Abstand 12 als Distanz der zueinander zugewandten Oberflächen des Windschutzelementes 9 und der Reduktionsmittelleitung 8 definiert ist. Das Windschutzelement 9 ist insbesondere rund ausgeformt und deckt die Leitung 8 über einen Umfang 13 ihrer Oberfläche im Bereich wenigstens eines Querschnitts 14 ab. Dabei ist die Reduktionsmittelleitung 8 über einen Winkelbereich 17, ausgehend vom Mittelpunkt der Reduktionsmittelleitung 8, abgedeckt, so dass ein Abführen der oberflächennahen Umgebungsluft der Reduktionsmittelleitung 8 in Folge eines vorbeiströmenden Gases 11 vermieden wird. Das Windschutzelement 9 kann in seiner Form insbesondere auch an die Lage der Reduktionsmittelleitung 8 angepasst sein, und wenigstens teilweise Verstärkungsstrukturen 19 aufweisen, die die Formstabilität des Windschutzelementes 9 erhöhen.

### Bezugszeichenliste

- 1: Vorrichtung
- 2: Vorratstank
- 3: Heizung
- 4: Reduktionsmittel
- 5: Einrichtung
- 6: Abgasleitung
- 7: Verbrennungsmotor
- 8: Reduktionsmittelleitung
- 9: Windschutzelement
- 10: Wärmeabfuhr
- 11: Gas
- 12: Abstand
- 13: Umfang
- 14: Querschnitt
- 15: Verbindung
- 16: Isolation
- 17: Winkelbereich
- 18: Kraftfahrzeug
- 19: Verstärkungsstrukturen
- 20: Abgasreinigungsanlage
- 21: Zone
- 22: Umgebungstemperatur
- 23: Fahrgeschwindigkeit
- 24: Komponente

## Patentansprüche

1. Vorrichtung (1) zur Abgasreinigung eines Fahrzeugs (18), zumindest aufweisend einen Vorratstank (2) für ein Reduktionsmittel (4), eine Einrichtung (5) zum Einbringen des Reduktionsmittels (4) in eine Abgasleitung (6) eines Verbrennungsmotors (7) sowie wenigstens eine Reduktionsmittelleitung (8) mit mehreren Zonen (21) zur strömungstechnischen Verbindung des Vorratstanks (2) mit der Einrichtung (5),
**dadurch gekennzeichnet, dass**
weiter wenigstens ein Windschutzelement (9) vorgesehen ist zur Verringerung der Wärmeabfuhr (10) von der Reduktionsmittelleitung (8), das wenigstens eine Windschutzelement (9) für ein Gas (11) nicht durchströmbar ist und in einem Abstand (12) kleiner als 100 mm zu der Reduktionsmitteleitung (8) angeordnet ist, und das Windschutzelement (9) den Umfang (13) zumindest eines Querschnitts (14) der Reduktionsmitteleitung (8) zu weniger als 270° abdeckt.

2. Vorrichtung (1) nach Anspruch 1, wobei das Windschutzelement (9) die Reduktionsmitteleitung (8) an keinem Querschnitt (14) der Reduktionsmitteleitung (8) über mehr als 270° abdeckt.

3. Vorrichtung (1) nach einem der vorhergehenden Ansprüche, wobei das Windschutzelement (9) an einer Verbindung (15) nur über eine Isolation (16) mit der Reduktionsmitteleitung (8) verbunden ist, wobei die Isolation (16) eine Wärmeleitfähigkeit von höchstens 0,1 W/(mK) aufweist, wobei das Windschutzelement (8) bevorzugt an der Reduktionsmittelleitung (4) selbst über eine Manschette angebunden ist.

4. Vorrichtung (1) nach einem der vorhergehenden Ansprüche, wobei die Zonen (21) räumlich voneinander getrennte Abschnitte der Reduktionsmittelleitung (4) sind, in denen jeweils zumindest eine Messwerterfassung oder eine Schutzmaßnahme gegen Einfrieren des Reduktionsmittels angeordnet und/oder durchführbar ist.

5. Vorrichtung (1) nach Anspruch 4, wobei in den Zonen (21) Sensoren, Messwertaufnehmer, Heizelemente oder Isolierungen aufweisen.

6. Vorrichtung (1) nach einem der vorhergehenden Ansprüche, wobei die Reduktionsmitteleitung (8) ein isoliertes, flexibles Schlauchmaterial oder ein metallisches Rohr umfasst und insbesondere wenigstens teilweise beheizbar sind.

7. Vorrichtung (1) nach einem der vorhergehenden Ansprüche, wobei das Windschutzelement (8) in einem Abstand kleiner 80 mm, insbesondere kleiner 50 mm, angeordnet ist.

8. Vorrichtung (1) nach einem der vorhergehenden Ansprüche, wobei das Windschutzelement (8) ein separates Bauteil ist, das an geeigneten Punkten der Fahrzeugkarosserie befestigt ist, insbesondere zusätzlich zu einer Isolierung oder Heizeinrichtung der Reduktionsmittelleitung (4).

9. Vorrichtung (1) nach einem der vorhergehenden Ansprüche, wobei ein Windschutzelement (8) wenigstens eine der folgenden Komponenten einer SCR-Anlage eines Fahrzeugs schützt: Filter, Pumpe, Ventil, Reduktionsmittelreservoir außerhalb des Vorratstanks, Einspritzdüse.

## Claims

1. Device (1) for cleaning of exhaust gas in a vehicle (18), which device (1) at least having a supply tank (2) for a reducing agent (4), an arrangement (5) for introducing the reducing agent (4) into an exhaust gas line (6) of an internal combustion engine (7) and at least one reducing agent line (8) with a plurality of zones (21) for fluidically connecting the supply tank (2) to the arrangement (5),
**characterized in that**,
in addition at least one wind protection element (9) is provided for reducing the conduction away of heat (10) from the reducing agent line (8), wherein a gas (11) cannot flow through the at least one wind protection element (9), and is arranged at a distance (12) of less than 100 mm from the reducing agent line (8) and the wind protection element (9) covers less than 270° of the circumference (13) of at least one cross section (14) of the reducing agent line (8).

2. Device (1) according to claim 1, wherein the wind protection element (9) does not cover more than 270° of the reducing agent line (8) at any cross section (14) of the reducing agent line (8).

3. Device (1) according to one of the preceding claims, wherein the wind protection element (9) is connected to the reducing agent line (8) at a connection (15) only via an insulation means (16), wherein the insulation means (16) has a heat conductance value of at maximum 0.1 W/(mK), wherein the wind protection element (8) is preferably tethered to the reducing agent line (4) itself by a collar.

4. Device (1) according to one of the preceding claims, wherein the zones (21) are sections of the reducing agent line (4) which are separated spatially from each other, in each of them at least one measured value acquisition or at least one protection measure against freezing is arranged and/or can be performed.

5. Device (1) according to claim 4, wherein sensors, measuring elements, heating elements or insulations are arranged in the zones (21).

6. Device (1) according to one of the preceding claims, wherein the reducing agent line (8) comprises an insulated, flexible hose material or a metallic tube and is in particular at least partially heatable.

7. Device (1) according to one of the preceding claims, wherein the wind protection element (8) is placed at a distance of less than 80 mm, preferably less than 50 mm.

8. Device (1) according to one of the preceding claims, wherein the wind protection element (8) is a separate element which is fixed to suitable spots of the car body, in particularly in addition to an isolation or a heating arrangement of the reducing agent line (4).

9. Device (1) according to one of the preceding claims, wherein the wind protection element (8) protects at least one of the following components of an SCR-system of a vehicle: filter, pump, valve, reducing agent reservoir outside a supply tank, injection nozzle.

## Revendications

1. Dispositif (1) de purification des gaz d'échappement d'un véhicule (18), présentant au moins un réservoir (2) pour un agent réducteur (4), un système (5) pour introduire l'agent réducteur (4) dans une conduite de gaz d'échappement (6) d'un moteur à combustion interne (7) ainsi qu'au moins une conduite d'agent réducteur (8) comprenant plusieurs zones (21) pour la connexion fluidique du réservoir (2) au système (5),
**caractérisé en ce**
**qu'**il est prévu en outre au moins un élément de protection contre le vent (9) pour réduire la dissipation de chaleur (10) de la conduite d'agent réducteur (8), l'au moins un élément de protection contre le vent (9) ne peut pas être parcouru par un gaz (11) et est disposé à une distance (12) inférieure à 100 mm de la conduite d'agent réducteur (8), et l'élément de protection contre le vent (9) recouvre la périphérie (13) d'au moins une section transversale (14) de la conduite d'agent réducteur (8) sur moins de 270°.

2. Dispositif (1) selon la revendication 1, dans lequel l'élément de protection contre le vent (9) ne recouvre la conduite d'agent réducteur (8) sur plus de 270° en aucune section transversale (14) de la conduite d'agent réducteur (8).

3. Dispositif (1) selon l'une quelconque des revendications précédentes, dans lequel l'élément de protection contre le vent (9) n'est connecté à la conduite d'agent réducteur (8) au niveau d'une connexion (15) que par le biais d'une isolation (16), l'isolation (16) présentant une conductibilité thermique maximale de 0,1 W/(mK), l'élément de protection contre le vent (8) étant raccordé de préférence à la conduite d'agent réducteur (4) elle-même par une manchette.

4. Dispositif (1) selon l'une quelconque des revendications précédentes, dans lequel les zones (21) sont des portions de la conduite d'agent réducteur (4) séparées spatialement les unes des autres, dans lesquelles à chaque fois au moins une détection de valeurs de mesure ou une mesure de protection contre le gel de l'agent réducteur est prévue et/ou peut être mise en oeuvre.

5. Dispositif (1) selon la revendication 4, dans lequel dans les zones (21) sont prévus des capteurs, des récepteurs de valeurs de mesure, des éléments chauffants ou des isolations.

6. Dispositif (1) selon l'une quelconque des revendications précédentes, dans lequel la conduite d'agent réducteur (8) comprend un matériau tubulaire flexible isolé ou un tube métallique et notamment peut être au moins en partie chauffée.

7. Dispositif (1) selon l'une quelconque des revendications précédentes, dans lequel l'élément de protection contre le vent (8) est disposé à une distance inférieure à 80 mm, en particulier inférieure à 50 mm.

8. Dispositif (1) selon l'une quelconque des revendications précédentes, dans lequel l'élément de protection contre le vent (8) est un composant séparé qui est fixé en des points appropriés de la carrosserie du véhicule, en particulier en plus d'une isolation ou d'un dispositif de chauffage de la conduite d'agent réducteur (4).

9. Dispositif (1) selon l'une quelconque des revendications précédentes, dans lequel un élément de protection contre le vent (8) protège au moins l'un des composants suivants d'une installation de SCR (réduction catalytique sélective) d'un véhicule : le filtre, la pompe, la soupape, le récipient d'agent réducteur à l'extérieur du réservoir, la buse d'injection.
